# EUROPÄISCHE PATENTSCHRIFT

(11) **EP 1 781 934 B1**
(45) Veröffentlichungstag und Bekanntmachung des Hinweises auf die Patenterteilung: **20.01.2010**
(21) Anmeldenummer: 05776255.1
(22) Anmeldetag: 05.08.2005
(51) Int. Cl.: F02M 65/00, F02M 63/02

(54) **VERFAHREN ZUR DIAGNOSE DES KRAFTSTOFFVERSORGUNGSSYSTEMS EINER BRENNKRAFTMASCHINE**
METHOD FOR DIAGNOSING A FUEL SUPPLY SYSTEM OF AN INTERNAL COMBUSTION ENGINE
PROCEDE POUR DIAGNOSTIQUER UN SYSTEME D'ALIMENTATION EN CARBURANT D'UN MOTEUR A COMBUSTION INTERNE

(30) Priorität: 19.08.2004 DE 102004040706
(43) Veröffentlichungstag der Anmeldung: 09.05.2007
(73) Patentinhaber: AUDI AKTIENGESELLSCHAFT, 85045 Ingolstadt (DE); IAV GmbH Ingenieurgesellschaft Auto und Verkehr, 10587 Berlin (DE)
(72) Erfinder: KLEIN, Holger, 85051 Ingolstadt (DE); BECKER, Bernd, 38116 Braunschweig (DE)
(74) Vertreter: Mader, Wilfried
(86) Internationale Anmeldenummer: PCT/EP2005/008496
(87) Internationale Veröffentlichungsnummer: WO 2006/018154

(56) Entgegenhaltungen:
- DE-A1- 10 255 345
- DE-A1- 19 513 158
- GB-A- 1 389 408
- US-A- 5 633 458
- US-B1- 6 526 948
- PATENT ABSTRACTS OF JAPAN Bd. 2003, Nr. 12, 5. Dezember 2003 (2003-12-05) -& JP 2003 328858 A (NIKKI CO LTD), 19. November 2003 (2003-11-19) in der Anmeldung erwähnt

## Beschreibung

Die Erfindung betrifft ein Verfahren zur Diagnose des Kraftstoffversorgungssystems einer Brennkraftmaschine gemäß dem Oberbegriff des Patentanspruches 1.

Es ist bekannt, dass als möglicher Alternativkraftstoff für Anwendungen im automobilen Bereich neben CNG (Compressed Natural Gas) auch LPG (Liquified Petrol Gas) eingesetzt wird. Im Rahmen von Konzepten werden derzeit auch Antriebe basierend auf LNG (Liquified Natural Gas) und H₂ (Wasserstoff) als Alternativkraftstoff diskutiert. Insbesondere so genannte bivalente Antriebskonzepte werden gegenwärtig in zunehmendem Maße entwickelt, wobei eine bekannte Brennkraftmaschine sowohl mit einem ersten flüssigen Kraftstoff als auch mit einem zweiten flüssigen oder gasförmigen Kraftstoff betrieben werden kann.

Die DE 102 55 345 A1 beschreibt das LPG-Kraftstoffversorgungssystem eines Fahrzeuges, welches eine Kraftstoffpumpe aufweist, die in einem LPG-Kraftstofftank angeordnet ist. Der LPG-Kraftstoff wird mittels dieser Kraftstoffpumpe unter Überdruck gesetzt, so dass der LPG-Kraftstoff in einer Kraftstoffzufuhrleitung in flüssigem Zustand vorliegt. Der unter Druck gesetzte LPG-Kraftstoff wird mittels einer Einspritzdüse der Brennkraftmaschine zugemessen. In der Kraftstoffzufuhrleitung sind ein Absperrventil sowie Druck- und Temperaturmessstellen angeordnet. Weiterhin ist eine Kraftstoffrücklaufleitung mit einem Druckregelventil vorgesehen.

In der JP 2003328858 A ist ein weiteres System zur Versorgung einer Brennkraftmaschine mit flüssigem LPG-Kraftstoff gezeigt. In der Kraftstoffzufuhr- und - rücklaufleitung dieses Systems sind jeweils Absperrventile angeordnet.

Vorbekannt aus der US 5 633 458 A ist ein Diagnosesystem für ein Kraftstoffversorgungssystem. Mittels eines Drucksensors wird der Druck im Kraftstoffversorgungssystem aufgezeichnet und mit einem gespeicherten Druckbereich verglichen. Auf diese Weise wird ermittelt, ob der Druck in dem Kraftstoffversorgungssystem gehalten wird. Im weiteren Verlauf der Diagnose werden die Injektoren betätigt und der Druckverlauf wird aufgezeichnet und mit einem gespeicherten Druckverlaufsbereich verglichen.

Eine Einrichtung zur Erkennung von Undichtigkeiten in einem Kraftstoffversorgungssystem, wie beispielsweise ein nicht einwandfrei schließender Kraftstoffinjektor, ist in der DE 195 13 158 A1 beschrieben. Dazu wird der Kraftstoffdruck in dem Kraftstoffversorgungssystem, beispielsweise während des Schubbetriebs der Brennkraftmaschine oder nach dem Abschalten der Brennkraftmaschine und der Kraftstoffpumpe messtechnisch erfasst. Der Verlauf des Kraftstoffdruckes wird in eine Recheneinrichtung eingelesen und mit einem vorgegebenen Verlauf verglichen. Bei erkannten Abweichungen zwischen dem gemessenen und dem vorgegebenen Verlauf des Kraftstoffdruckes wird eine Fehleranzeige ausgelöst.

Zur Erkennung von Undichtigkeiten, beispielsweise in einem bekannten LPG-Kraftstoffversorgungssystem, wie etwa ein nicht einwandfrei schließender Kraftstoffinjektor, ist die aus der DE 195 13 158 A1 vorbekannte Einrichtung jedoch nicht geeignet. LPG-Kraftstoff besteht allgemein allein aus Butan, Propan oder einer Kombination dieser beiden Gase. Diese Gase liegen entsprechend dem temperaturabhängigen Sättigungsdampfdruck bei normalen Umgebungsbedingungen nahe dem Phasenübergang von flüssig zu gasförmig. Im Falle des Abschaltens der Kraftstoffpumpe können in Teilen des Kraftstoffversorgungssystems lokale Temperaturüberhöhungen auftreten, welche einen Phasenübergang des LPG-Kraftstoffes von flüssig zu gasförmig zur Folge haben. Die Ursache dafür liegt in der mangelnden Wärmeabfuhr, welche beim Betrieb der Brennkraftmaschine durch die Zirkulation des LPG-Kraftstoffes zwischen Motor und Tank erreicht wird. Bei einem solchen Phasenübergang von Anteilen des LPG-Kraftstoffes entstehen kompressible Bereiche im LPG-Kraftstoffversorgungssystem, die bei einer Messung des Verlaufes des Kraftstoffdruckes nach Abschalten der Kraftstoffpumpe zu nicht reproduzierbaren Kraftstoffdruckschwankungen führen und daher nicht zur Bewertung der Dichtheit des LPG-Kraftstoffversorgungssystems herangezogen werden können.

Eine Prüfung des Kraftstoffversorgungssystems auf Undichtigkeiten mit der bekannten Einrichtung ist dann denkbar, wenn sich die Temperatur des gesamten Kraftstoffversorgungssystems auf einem einheitlichen Niveau eingeschwungen hat. Die dafür benötigte Zeit ist im Zusammenhang mit einem längeren Stillstand der Brennkraftmaschine gegeben. Da die Dauer eines längeren Stillstandes nach erfolgter Prüfung des Kraftstoffversorgungssystems auf Undichtigkeiten unbekannt bleibt, ist das Ergebnis dieser Prüfung für den weiteren Betrieb nicht repräsentativ.

Weiterhin ist bedingt durch die Eigenschaften des LPG-Kraftstoffes zu bedenken, dass sich ein nennenswerter Kraftstoffdruckabfall in einem LPG-Kraftstoffversorgungssystem mit einem größeren Volumen, welches sich aus den Einzelvolumen der Leitungs-, Verbindungs- und Zumessungselemente zusammensetzt, nur im Zusammenhang mit einer erheblichen Leckagemenge mess- und auswertbar darstellt. Aus der Leckagemenge flüssigen LPG-Kraftstoffes entsteht eine rund 250-fache Menge an gasförmigem Kraftstoff und etwa eine 15000-fache Menge an explosivem Gemisch. Eine Kraftstoffdruckabfallprüfung auf Basis des LPG-Kraftstoffdruckes im gesamten Volumen des Kraftstoffversorgungssystems ist daher mit Risiken verbunden. Es ist folglich notwendig, kleine Leckagemengen erkennen zu können.

Aufgabe der vorliegenden Erfindung ist es, die Diagnose des Kraftstoffversorgungssystems einer Brennkraftmaschine zu ermöglichen. Die Prüfung soll auf einfache Weise mit möglichst geringem Aufwand, innerhalb einer kurzen Zeit und während des Betriebs der Brennkraftmaschine mit geringen Risiken möglich sein.

Erfindungsgemäß wird dies dadurch erreicht, dass zur Diagnose des Kraftstoffversorgungssystems Kraftstoffdruckprüfungen in einzeln absperrbaren Volumen des Kraftstoffversorgungssystems durchgeführt werden. Die Einzelvolumen des Kraftstoffversorgungssystems werden durch das Schließen der Absperrventile in der Kraftstoffzufuhr- und -rücklaufleitung gebildet. Die Kraftstoffdruckprüfungen erfolgen auf Grundlage der Messung von Kraftstoffdruck und Kraftstofftemperatur und sind zusammen mit dem Öffnen und Schließen der Absperrventile in der Kraftstoffzufuhr- und -rücklaufleitung Bestandteil eines Prozessablaufes. Die Prozessführung wird mit einer Ablaufsteuerung umgesetzt, welche mit einer Diagnoseauswertung gekoppelt ist. Weiterhin kann vor Beginn des Prozessablaufes geprüft werden, ob ein ausreichender Kraftstoffdruck im Kraftstoffversorgungssystem für eine anschließende Diagnose vorhanden ist. In den Prozessablauf ist außerdem eine Konditionierung des Kraftstoffversorgungssystems eingebunden. Aufgabe dieser Konditionierung ist das Einstellen von günstigen Temperaturbedingungen für eine anschließende Diagnose des Kraftstoffversorgungssystems. Diese Konditionierung erfolgt in Form einer Spülung des Kraftstoffversorgungssystems mit Kraftstoff. Ergebnis des Ablaufes der erfindungsgemäßen Diagnose eines Kraftstoffversorgungssystems ist die Bereitstellung einer Entscheidungsgrundlage zur Freigabe des Kraftstoffversorgungssystems.

Ein wesentlicher Vorteil der Erfindung ist es, dass durch die Durchführung der Kraftstoffdruckprüfungen in einzeln absperrbaren Volumen des Kraftstoffversorgungssystems eine kleine Leckagemenge flüssigen Kraftstoffes erkannt werden kann. Weiterhin kann durch die Kraftstoffdruckprüfungen auf die Funktionstüchtigkeit der Kraftstoffpumpe, der Absperrventile und den Zustand der Kraftstoffzufuhr- und - rücklaufleitung geschlossen werden. Ein weiterer Vorteil dieses Verfahrens zur Diagnose des Kraftstoffversorgungssystems liegt darin, dass durch die Konditionierung des Kraftstoffversorgungssystems in Abhängigkeit der Temperaturverhältnisse der Brennkraftmaschine und des Kraftstoffes günstige Bedingungen für eine Bewertung der Dichtheit des Kraftstoffversorgungssystems auf Grundlage einer Kraftstoffdruckmessung geschaffen werden, da auf diese Weise eine Wärmeabfuhr und somit eine Verminderung der Entstehung kompressibler Bereiche im Kraftstoffversorgungssystem erreicht wird. Dadurch, dass vor Beginn des Prozessablaufes eine Prüfung erfolgt, ob ein ausreichender Kraftstoffdruck im Kraftstoffversorgungssystem für eine anschließende Diagnose vorhanden ist, können unnötige Diagnoselaufzeiten vermieden werden. Es ist im Sinne der vorliegenden Erfindung als gleichwertig anzusehen, dass der für die Kraftstoffdruckprüfungen erforderliche Kraftstoffdruck nicht durch eine Kraftstoffpumpe sondern durch ein vorhandenes treibendes Gefälle zwischen Kraftstofftank und den weiteren Bestandteilen des Kraftstoffversorgungssystems bereitgestellt wird.

Weitere vorteilhafte Ausgestaltungen sind in den Unteransprüchen beschrieben, sie werden zusammen mit ihren Wirkungen erläutert.

Beispielhaft wird hier die Anwendung des erfindungsgemäßen Verfahrens beschrieben. In den dazugehörigen Figuren zeigen:
- Fig. 1:: schematische Darstellung des Kraftstoffversorgungssystems,
- Fig. 2:: Übersicht des erfindungsgemäßen Verfahrens,
- Fig. 3:: Ablaufdiagramm Kraftstoffdruckprüfungen.

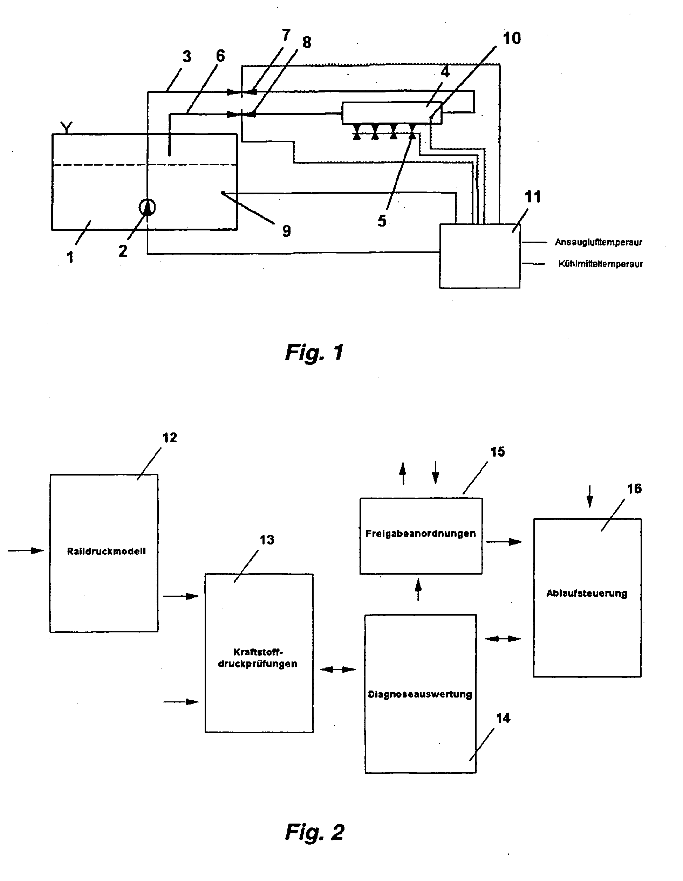

In der **Figur 1** ist eine schematische Darstellung eines Kraftstoffversorgungssystems beispielsweise für LPG-Kraftstoff gezeigt. In einem Kraftstofftank **1** ist flüssiger LPG-Kraftstoff gespeichert. Mittels einer Kraftstoffpumpe **2** wird der flüssige LPG-Kraftstoff in der Kraftstoffzufuhrleitung **3** zu einem Rail **4** gefördert. In dem Rail **4** ist mindestens ein Kraftstoffinjektor **5** angeordnet. Nicht am Kraftstoffinjektor **5** entnommener LPG-Kraftstoff wird in der Kraftstoffrücklaufleitung **6** zurück zum Kraftstofftank **1** gefördert. In der Kraftstoffzufuhrleitung **3** und der Kraftstoffrücklaufleitung **6** sind Absperrventile **7** und **8** vorgesehen. Im Kraftstofftank **1** ist eine Temperaturmessstelle **9** und in dem Rail **4** eine Druckmessstelle **10** angeordnet. Der Kraftstoffinjektor **5,** die Kraftstoffpumpe **2,** die Absperrventile **7** und **8** sowie die Temperaturmessstelle **9** und die Druckmessstelle **10** sind neben Mitteln zur Erfassung der Ansaug- und Kühlwassertemperatur mit einem Steuergerät **11** verbunden. Das Steuergerät **11** entspricht dem heutigen Stand der Technik, das heißt, es dient unter anderem der Erfassung von Messgrößen, dem dauerhaften und nicht dauerhaften Speichern sowie Weiterverarbeiten von Betriebs- und Funktionsdaten auch der Ausgabe von Ansteuersignalen.

Eine Übersicht des erfindungsgemäßen Verfahrens ist in **Figur 2** dargestellt. In einem Raildruckmodell **12** wird die Kraftstoffdruckdifferenz zwischen dem Rail **4** und dem Kraftstofftank **1** berechnet, welche die Kraftstoffpumpe **2** erzeugt. Die zur Diagnose des Kraftstoffversorgungssystems notwendigen Kraftstoffdruckprüfungen, auf Basis des Raildruckmodells **12** sowie weiterer gemessener und modellierter Größen, sind im Funktionsblock **13** vorgesehen und deren Ergebnisse werden in einem Statuswort gebündelt, welches an die Diagnoseauswertung **14** übergeben wird. Die Diagnoseauswertung **14** ist mit einer Ablaufsteuerung **16** gekoppelt, welche die Prozessführung umsetzt. Liegt kein Fehler im Kraftstoffversorgungssystem vor, wird im Funktionsblock **15** eine Kenngröße als Entscheidungsgrundlage zur Freigabe des Kraftstoffversorgungssystems gebildet.
Mittels des Raildruckmodells **12** wird die Kraftstoffdruckdifferenz zwischen Kraftstofftank **1** und Rail **4** berechnet, welche die Kraftstoffpumpe **2** erzeugt. Grundlage dafür ist eine für das jeweilige Kraftstoffversorgungssystem frei parametrierbare Kennlinie, welche in Abhängigkeit von der aufgenommenen Leistung der Kraftstoffpumpe **2** die Kraftstoffdruckdifferenz zwischen Kraftstofftank **1** und Rail **4** beschreibt. Die aufgenommene Leistung der Kraftstoffpumpe **2** wird beispielsweise aus der Bordnetzspannung **ub** abgeleitet. Die Kraftstoffdruckdifferenz zwischen Kraftstofftank **1** und Rail **4** wird weiterhin um den auf Basis des an der Temperaturmessstelle **9** ermittelten Kraftstofftemperaturwertes korrigiert.

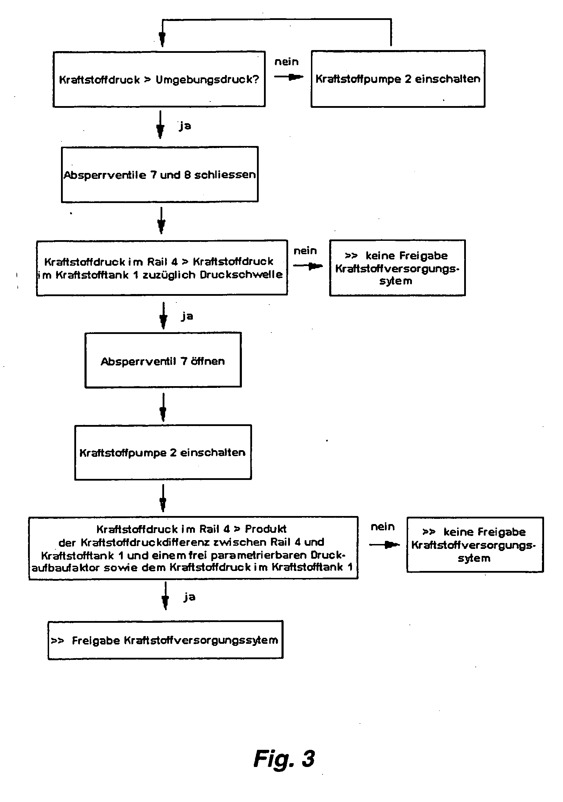

In **Figur 3** ist der Ablauf der Kraftstoffdruckprüfungen aus Funktionsblock **13** dargestellt. In einem ersten Schritt wird geprüft, ob der Kraftstoffdruck im Kraftstoffversorgungssystem signifikant über einem in dem Steuergerät **11** gespeicherten Wert nahe dem Umgebungsdruck oder über dem in einer weiteren Ausführungsform messtechnisch erfassten Umgebungsdruck liegt.

Liegt der Kraftstoffdruck im Kraftstoffversorgungssystem nicht signifikant über dem Umgebungsdruck, kann keine Undichtigkeit des Kraftstoffversorgungssystems erkannt werden, da kein Kraftstoffdruckabfall mit dem Entweichen der Leckagemenge verbunden ist. Ein derartiger Zustand ist bei niedrigen Außentemperaturen bei Verwendung von Butan als LPG-Kraftstoff zu erwarten.

Das Resultat dieses ersten Schrittes wird an die Diagnoseauswertung **14** und die Ablaufsteuerung **16** übergeben, welche einen Kraftstoffdruckaufbau im Kraftstoffversorgungssystem durch die Ansteuerung der Kraftstoffpumpe **2** einleiten. Es liegt nun ein Kraftstoffdruck signifikant über dem Umgebungsdruck im Kraftstoffversorgungssystem vor.

In einem zweiten Schritt werden zunächst die Absperrventile **7** und **8** in der Kraftstoffzufuhr- und -rücklaufleitung **3** und **6** geschlossen. Es wird nun geprüft, ob der an der Druckmessstelle **10** im Rail **4** ermittelte Kraftstoffdruck unter den Kraftstoffdruck im Kraftstofftank **1** zuzüglich einer frei parametrierbaren Druckschwelle für die geschlossenen Absperrventile **7** und **8** in der Kraftstoffzufuhr- und -rücklaufleitung **3** und **6** fällt. Auf diese Weise kann auf Undichtigkeiten, wie etwa einen nicht einwandfrei schließenden Kraftstoffinjektor **5,** geschlossen werden. Der Kraftstoffdruck im Kraftstofftank **1** wird auf Basis des an der Temperaturmessstelle **9** ermittelten Kraftstofftemperaturwertes, dem gemessenen Kraftstoffdruck im Rail **4** und dem im Steuergerät **11** gespeicherten funktionalen Zusammenhang zwischen dem Sättigungsdampfdruck und der Temperatur ermittelt. In einer weiteren Ausführungsform kann der Kraftstoffdruck im Kraftstofftank 1 messtechnisch erfasst werden.

Das Resultat dieses zweiten Schrittes wird an die Diagnoseauswertung **14** und die Ablaufsteuerung **16** übergeben, welche entsprechend dem Ergebnis der vorherigen Kraftstoffdruckprüfungen den weiteren Ablauf der Kraftstoffdruckprüfungen unterbrechen oder weiterführen. Es wird davon ausgegangen, dass der Ablauf weitergeführt wird.

Im dritten Schritt wird das Absperrventil **7** in der Kraftstoffzufuhrleitung **3** geöffnet. Das Absperrventil **8** in der Kraftstoffrücklaufleitung **6** bleibt geschlossen. Anschließend wird geprüft, ob die Kraftstoffpumpe **2** entsprechende Kraftstoffdruckschwellwerte erreicht oder unzulässig überschreitet. Dabei wird der gemessene Kraftstoffdruck im Rail **4** einem Wert gegenübergestellt, welcher sich aus dem Produkt der Kraftstoffdruckdifferenz zwischen Rail **4** und Kraftstofftank **1** und einem frei parametrierbaren Druckaufbaufaktor sowie dem Kraftstoffdruck im Kraftstofftank **1** zusammensetzt. Der Kraftstoffdruck im Kraftstofftank **1** wird auf Basis des an der Temperaturmessstelle **9** ermittelten Kraftstofftemperaturwertes, des gemessenen Kraftstoffdruckes im Rail **4** und des im Steuergerät **11** gespeicherten funktionalen Zusammenhanges zwischen dem Sättigungsdampfdruck und der Temperatur ermittelt. In einer weiteren Ausführungsform kann der Kraftstoffdruck im Kraftstofftank **1** messtechnisch erfasst werden.

Auf diese Weise kann auf eine nicht voll funktionsfähige Kraftstoffpumpe **2,** eine zugesetzte Kraftstoffzufuhr- oder -rücklaufleitung **3** oder **6** sowie auf defekte stets geschlossene Absperrventile **7** oder **8** in der Kraftstoffzufuhr- und -rücklaufleitung **3** und **6** rückgeschlossen werden, da in diesen Fällen die entsprechenden Kraftstoffdruckschwellwerte nicht erreicht oder unzulässig überschritten werden.

Das Resultat dieses dritten Schrittes wird an die Diagnoseauswertung **14** und die Ablaufsteuerung **16** übergeben. Liegt kein Fehler im Kraftstoffversorgungssystem vor, wird im Funktionsblock **15** eine Kenngröße als Entscheidungsgrundlage zur Freigabe des Kraftstoffversorgungssystems gebildet.

In einer weiteren Ausführungsform ist neben den statischen Druckprüfungen für die einzelnen Prozessschritte auch die Erfassung des Kraftstoffdruckgradienten sowie ein Vergleich dessen mit Werten, welche im Steuergerät **11** gespeichert sind, vorgesehen.

Den Kraftstoffdruckprüfungen ist weiterhin eine Konditionierung des Kraftstoffversorgungssystems in Abhängigkeit der Temperaturverhältnisse der Brennkraftmaschine und des Kraftstoffes zugeordnet. Diese Konditionierung wird auf Grundlage der Berechnung einer minimalen Spülzeit des Kraftstoffversorgungssystems umgesetzt. Berücksichtigt werden die Temperatur der Ansaugluft, des Kühlmittels und des LPG-Kraftstoffes. Die Durchführung der Spülung des Kraftstoffversorgungssystems wird individuell für jeden Prozessschritt durch die Diagnoseauswertung **14** bestimmt.

### Bezugszeichenliste

- 1: Kraftstofftank
- 2: Kraftstoffpumpe
- 3: Kraftstoffzufuhrleitung
- 4: Rail
- 5: Kraftstoffinjektor
- 6: Kraftstoffrücklaufleitung
- 7: Absperrventil Kraftstoffzufuhrleitung
- 8: Absperrventil Kraftstoffrücklaufleitung
- 9: Temperaturmessstelle
- 10: Druckmessstelle
- 11: Steuergerät
- 12: Funktionsblock Raildruckmodell
- 13: Funktionsblock Kraftstoffdruckprüfungen
- 14: Funktionsblock Diagnoseauswertung
- 15: Funktionsblock Freigabeanordnungen
- 16: Funktionsblock Ablaufsteuerung
- ub: Bordnetzspannung

## Patentansprüche

1. Verfahren zur Diagnose eines aus einem Kraftstofftank (**1**) für Kraftstoff, einer Kraftstoffpumpe (**2**), einer Kraftstoffzufuhrleitung (**3**), einem Rail (**4**), mindestens einem Kraftstoffinjektor (**5**), einer Kraftstoffrücklaufleitung (**6**), einem oder mehreren Absperrventilen (**7** und **8**), mindestens einer Temperaturmessstelle (**9**), mindestens einer Druckmessstelle (**10**), einem Steuergerät (**11**) sowie Mitteln zur Erfassung der Ansaug- und Kühlmitteltemperatur bestehenden Kraftstoffversorgungssystems einer Brennkraftmaschine,
**dadurch gekennzeichnet,**
**dass** zur Diagnose des Kraftstoffversorgungssystems Kraftstoffdruckprüfungen in einzeln absperrbaren Volumen des Kraftstoffversorgungssystems durchgeführt werden, wobei die Einzelvolumen des Kraftstoffversorgungssystems durch das Schließen der Absperrventile (**7** und/oder **8**) in der Kraftstoffzufuhr- und/oder -rücklaufleitung (**3** und/oder **6**) gebildet werden, wobei die Kraftstoffdruckprüfungen folgende Schritte umfassen:
- Schließen der Absperrventile (**7** und **8**) in der Kraftstoffzufuhr- und - rücklaufleitung (**3** und **6**)
- Prüfung, ob der an der Druckmessstelle (**10**) im Rail (**4**) ermittelte Kraftstoffdruck unter den Kraftstoffdruck im Kraftstofftank (**1**) zuzüglich einer frei parametrierbaren Druckschwelle für die geschlossenen Absperrventile (**7** und **8**) in der Kraftstoffzufuhr- und -rücklaufleitung (**3** und **6**) fällt
- Öffnen des Absperrventils (**7**) in der Kraftstoffzufuhrleitung (**3**)
- Prüfung, ob die eingeschaltete Kraftstoffpumpe (**2**) entsprechende Kraftstoffdruckschwellwerte erreicht oder unzulässig überschreitet, wobei der gemessene Kraftstoffdruck im Rail (**4**) einem Wert gegenübergestellt wird, welcher sich aus dem Produkt der Kraftstoffdruckdifferenz zwischen Rail (**4**) und Kraftstofftank (**1**) und einem frei parametrierbaren Druckaufbaufaktor sowie dem Kraftstoffdruck im Kraftstofftank (**1**) zusammensetzt, wobei die Kraftstoffdruckdifferenz zwischen Rail (**4**) und Kraftstofftank (**1**) mittels einem Raildruckmodell (**12**) ermittelt wird.

2. Verfahren nach Anspruch 1,
**dadurch gekennzeichnet,**
**dass** der Kraftstoffdruck im Kraftstofftank (**1**) auf Basis des an der Temperaturmessstelle (**9**) ermittelten Kraftstofftemperaturwertes, des gemessenen Kraftstoffdruckes im Rail (**4**) und des in einem Steuergerät (**11**) gespeicherten funktionalen Zusammenhanges zwischen dem Sättigungsdampfdruck und der Temperatur ermittelt oder messtechnisch erfasst wird.

3. Verfahren nach Anspruch 1 oder 2,
**dadurch gekennzeichnet,**
**dass** die Grundlage des Raildruckmodells (**12**) eine für das jeweilige Kraftstoffversorgungssystem frei parametrierbare Kennlinie ist, welche in Abhängigkeit von der aufgenommenen Leistung der Kraftstoffpumpe (**2**) die Kraftstoffdruckdifferenz zwischen Kraftstofftank (**1**) und Rail (**4**) beschreibt, wobei die aufgenommene Leistung der Kraftstoffpumpe (**2**) aus der Bordnetzspannung (**ub**) abgeleitet und die Kraftstoffdruckdifferenz zwischen Kraftstofftank (**1**) und Rail (**4**) um den auf Basis des an der Temperaturmessstelle (**9**) ermittelten Kraftstofftemperaturwertes korrigiert wird.

4. Verfahren nach Anspruch 1 bis 3,
**dadurch gekennzeichnet,**
**dass** die Kraftstoffdruckprüfungen und das Schließen der Absperrventile (**7** und/oder **8**) in der Kraftstoffzufuhr- und/oder -rücklaufleitung (**3** und/oder **6**) Bestandteil eines Prozessablaufes sind, wobei der
Prozessablauf folgende Schritte umfasst:
- Berechnung der Kraftstoffdruckdifferenz zwischen dem Rail (**4**) und dem Kraftstofftank (**1**) welche die Kraftstoffpumpe (**2**) erzeugt mittels einem Raildruckmodell (**12**)
- Kraftstoffdruckprüfungen auf Basis des Raildruckmodells (**12**), des an der Druckmessstelle (**10**) im Rail (**4**) ermittelten Kraftstoffdruckes sowie des Kraftstoffdruckes im Kraftstofftank (**1**) in einem Funktionsblock (**13**)
- Übergabe der Ergebnisse der Kraftstoffdruckprüfungen an eine Diagnoseauswertung (**14**)
- Bildung einer Kenngröße als Entscheidungsgrundlage zur Freigabe des Kraftstoffversorgungssystems
wobei die Prozessführung mit einer Ablaufsteuerung (**16**), welche mit der Diagnoseauswertung (**14**) gekoppelt ist, umgesetzt wird und vor Beginn des Prozessablaufes geprüft wird, ob der Kraftstoffdruck im Kraftstoffversorgungssystem signifikant über einem in einem Steuergerät (**11**) gespeicherten Wert nahe dem Umgebungsdruck oder über einem messtechnisch erfassten Umgebungsdruck liegt.

5. Verfahren nach Anspruch 4,
**dadurch gekennzeichnet,**
**dass** wenn der Kraftstoffdruck nicht signifikant über dem Umgebungsdruck liegt durch die Diagnoseauswertung (**14**) und die Ablaufsteuerung (**16**) eine Ansteuerung der Kraftstoffpumpe (**2**) zur Erhöhung des Kraftstoffdruckes eingeleitet wird.

6. Verfahren nach Anspruch 1 bis 5,
**dadurch gekennzeichnet,**
**dass** den Kraftstoffdruckprüfungen eine Konditionierung des Kraftstoffversorgungssystems in Abhängigkeit der Temperatur der Ansaugluft, des Kühlmittels der Brennkraftmaschine und des Kraftstoffes zugeordnet ist wobei diese Konditionierung des Kraftstoffversorgungssystems in Form einer Spülung mit Kraftstoff durchgeführt wird.

7. Verfahren nach Anspruch 6,
**dadurch gekennzeichnet,**
**dass** diese Konditionierung auf Grundlage einer Berechnung der minimalen Spülzeit des Kraftstoffversorgungssystems umgesetzt wird.

## Claims

1. Method for diagnosing a fuel supply system of an internal combustion engine, the said system comprising a fuel tank (1) for fuel, a fuel pump (2), a fuel feed line (3), a rail (4), at least one fuel injector (5), a fuel return line (6), one or more shut-off valves (7 and 8), at least one temperature measuring point (9), at least one pressure measuring point (10), a control device (11) and means for detecting the intake and coolant temperature, **characterized in that**, for the purpose of diagnosing the fuel supply system, fuel pressure tests are carried out in individually closable volumes of the fuel supply system, the individual volumes of the fuel supply system being formed by closing the shut-off valves (7 and/or 8) in the fuel feed and/or return line (3 and/or 6), the fuel pressure tests comprising the following steps:
- closing the shut-off valves (7 and 8) in the fuel feed and return line (3 and 6)
- testing whether the fuel pressure determined at the pressure measuring point (10) in the rail (4) is below the fuel pressure in the fuel tank (1) plus a freely parameterizable pressure threshold for the closed shut-off valves (7 and 8) in the fuel feed and return line (3 and 6)
- opening the shut-off valve (7) in the fuel feed line (3)
- testing whether the switched-on fuel pump (2) reaches or impermissibly exceeds corresponding fuel pressure threshold values, the measured fuel pressure in the rail (4) being compared with a value which is composed of the product of the fuel pressure difference between the rail (4) and the fuel tank (1), a freely parameterizable pressure build-up factor and the fuel pressure in the fuel tank (1), the fuel pressure difference between the rail (4) and the fuel tank (1) being determined by means of a rail pressure model (12).

2. Method according to Claim 1, **characterized in that** the fuel pressure in the fuel tank (1) is determined on the basis of the fuel temperature value determined at the temperature measuring point (9), the measured fuel pressure in the rail (4) and the functional relationship, stored in a control device (11), between the saturation vapour pressure and the temperature, or is detected by metrological means.

3. Method according to Claim 1 or 2, **characterized in that** the basis of the rail pressure model (12) is a characteristic which can be freely parameterized for the respective fuel supply system and which describes the fuel pressure difference between the fuel tank (1) and the rail (4) as a function of the power consumed by the fuel pump (2), the power consumed by the fuel pump (2) being derived from the on-board system voltage (ub), and the fuel pressure difference between the fuel tank (1) and the rail (4) being corrected on the basis of the fuel temperature value determined at the temperature measuring point (9).

4. Method according to Claim 1 to 3, **characterized in that** the fuel pressure tests and the closing of the shut-off valves (7 and/or 8) in the fuel feed and/or return line (3 and/or 6) are part of a process sequence, the process sequence comprising the following steps:
- calculating the fuel pressure difference between the rail (4) and the fuel tank (1), which the fuel pump (2) generates, by means of a rail pressure model (12)
- fuel pressure tests on the basis of the rail pressure model (12), the fuel pressure determined at the pressure measuring point (10) in the rail (4), and the fuel pressure in the fuel tank (1) in a function block (13)
- transfer of the results of the fuel pressure tests to a diagnostic evaluation (14)
- forming a characteristic quantity as a basis for a decision on the release of the fuel supply system,
process management being implemented using a sequence control (16) which is coupled to the diagnostic evaluation (14), and a test being carried out before the start of the process sequence to determine whether the fuel pressure in the fuel supply system is significantly above a value, stored in a control device (11), close to the ambient pressure or above an ambient pressure detected by metrological means.

5. Method according to Claim 4, **characterized in that**, if the fuel pressure is not significantly above the ambient pressure, activation of the fuel pump (2) to increase the fuel pressure is initiated by the diagnostic evaluation (14) and the sequence control (16).

6. Method according to Claim 1 to 5, **characterized in that** the fuel pressure tests are associated with conditioning of the fuel supply system as a function of the temperature of the intake air, of the coolant of the internal combustion engine and of the fuel, this conditioning of the fuel supply system taking the form of flushing with fuel.

7. Method according to Claim 6, **characterized in that** this conditioning is implemented on the basis of calculation of the minimum flushing time of the fuel supply system.

## Revendications

1. Procédé pour diagnostiquer un système d'alimentation en carburant d'un moteur à combustion interne constitué d'un réservoir de carburant (1) pour du carburant, d'une pompe à carburant (2), d'une conduite d'amenée de carburant (3), d'un rail (4), d'au moins un injecteur de carburant (5), d'une conduite de retour de carburant (6), d'une ou plusieurs soupapes d'arrêt (7 et 8), d'au moins un point de mesure de température (9), d'au moins un point de mesure de pression (10), d'un appareil de commande (11) ainsi que de moyens pour détecter la température d'aspiration et du réfrigérant,
**caractérisé en ce que**
pour le diagnostic du système d'alimentation en carburant, on effectue des contrôles de pression de carburant dans des volumes pouvant être bloqués séparément du système d'alimentation en carburant, les volumes individuels du système d'alimentation en carburant étant formés en fermant les soupapes d'arrêt (7 et/ou 8) dans la conduite d'amenée et/ou de retour de carburant (3 et/ou 6), les tests de pression de carburant comprenant les étapes suivantes :
- fermeture des soupapes d'arrêt (7 et 8) dans la conduite d'amenée et de retour de carburant (3 et 6),
- contrôle pour savoir si la pression de carburant détectée au point de mesure de pression (10) dans le rail (4) tombe en dessous de la pression de carburant dans le réservoir de carburant (1), additionnée d'un seuil de pression paramétrable librement pour les soupapes d'arrêt fermées (7 et 8) dans la conduite d'alimentation et de retour de carburant (3 et 6),
- ouverture de la soupape d'arrêt (7) dans la conduite d'amenée de carburant (3),
- contrôle pour savoir si la pompe à carburant enclenchée (2) atteint des valeurs de seuil de pression de carburant correspondantes ou les dépasse de manière inadmissible, la pression de carburant mesurée dans le rail (4) étant corrélée à une valeur qui se compose du produit de la différence de pression de carburant entre le rail (4) et le réservoir de carburant (1) et un actionneur d'augmentation de pression paramétrable librement ainsi que de la pression de carburant dans le réservoir de carburant (1), la différence de pression de carburant entre le rail (4) et le réservoir de carburant (1) étant déterminée au moyen d'un modèle de pression de rail (12).

2. Procédé selon la revendication 1,
**caractérisé en ce que**
la pression de carburant dans le réservoir de carburant (1) est mesurée ou déterminée par une technique de mesure sur la base de la valeur de la température de carburant déterminée au point de mesure de température (9), de la pression de carburant dans le rail (4) et de la relation fonctionnelle mémorisée dans un appareil de commande (11) entre la pression de valeur de saturation et la température.

3. Procédé selon la revendication 1 ou 2,
**caractérisé en ce que**
la base du modèle de pression du rail (12) est une caractéristique paramétrable librement pour le système d'alimentation en carburant spécifique, qui décrit, en fonction de la puissance reçue de la pompe à carburant (2), la différence de pression de carburant entre le réservoir de carburant (1) et le rail (4), la puissance reçue de la pompe à carburant (2) étant dérivée de la tension du réseau de bord (ub) et la différence de pression de carburant entre le réservoir de carburant (1) et le rail (4) étant corrigée sur la base de la valeur de température de carburant déterminée au point de mesure de la température (9).

4. Procédé selon les revendications 1 à 3,
**caractérisé en ce que**
les contrôles de pression de carburant et la fermeture des soupapes d'arrêt (7 et/ou 8) dans la conduite d'amenée et/ou de retour de carburant (3 et/ou 6) font partie du déroulement d'un procédé qui comprend les étapes suivantes :
- calcul de la différence de pression de carburant entre le rail (4) et le réservoir de carburant (1), qui est produite par la pompe à carburant (2) au moyen d'un modèle de pression de rail (12),
- contrôles de pression de carburant sur la base du modèle de pression de rail (12), de la pression de carburant déterminée au point de mesure de pression (10) dans le rail (4) ainsi que de la pression de carburant dans le réservoir de carburant (1) dans un bloc fonctionnel (13),
- transfert des résultats des contrôles de pression de carburant à une analyse de diagnostic (14),
- formation d'une grandeur caractéristique en tant que base de décision pour la libération du système d'alimentation en carburant,
la conduite du processus étant mise en oeuvre avec une commande du déroulement (16), qui est accouplée à l'analyse de diagnostic (14), et avant le début du déroulement du processus, on contrôle si la pression de carburant dans le système d'alimentation en carburant est considérablement au-dessus d'une valeur mémorisée dans un appareil de commande (11) et proche de la pression ambiante, ou est au-dessus d'une pression ambiante détectée par une technique de mesure.

5. Procédé selon la revendication 4,
**caractérisé en ce que**
lorsque la pression de carburant n'est pas considérablement au-dessus de la pression ambiante, l'analyse de diagnostic (14) et la commande de déroulement (16) lance une commande de la pompe à carburant (2) pour augmenter la pression de carburant.

6. Procédé selon les revendications 1 à 5,
**caractérisé en ce que**
l'on associe aux contrôles de pression de carburant un conditionnement du système d'alimentation en carburant en fonction de la température de l'air d'admission, du réfrigérant du moteur à combustion interne et du carburant, ce conditionnement du système d'alimentation en carburant étant effectué sous forme de rinçage avec du carburant.

7. Procédé selon la revendication 6,
**caractérisé en ce que**
ce conditionnement est mis en oeuvre sur la base d'un calcul du temps de rinçage minimum du système d'alimentation en carburant.
